# EUROPÄISCHE PATENTSCHRIFT

(11) **EP 1 654 744 B1**
(45) Veröffentlichungstag und Bekanntmachung des Hinweises auf die Patenterteilung: **16.05.2007**
(21) Anmeldenummer: 04762630.4
(22) Anmeldetag: 09.08.2004
(51) Int. Cl.: H01G 4/38

(54) **KONDENSATORMODUL UND VERFAHREN ZU DESSEN HERSTELLUNG**
CAPACITOR MODULE AND METHOD FOR THE PRODUCTION THEREOF
MODULE DE CONDENSATEUR ET PROCEDE DE FABRICATION

(30) Priorität: 12.08.2003 DE 10337041
(43) Veröffentlichungstag der Anmeldung: 10.05.2006
(73) Patentinhaber: EPCOS AG, 81669 München (DE)
(72) Erfinder: GOESMANN, Hubertus, 89564 Auernheim (DE); MICHEL, Hartmut, 89520 Heidenheim (DE); NOWAK, Stefan, 73540 Heubach (DE); SETZ, Michael, 89179 Beimerstetten (DE); STAIB, Bernd, 89428 Syrgenstein (DE)
(74) Vertreter: Epping - Hermann - Fischer
(86) Internationale Anmeldenummer: PCT/DE2004/001785
(87) Internationale Veröffentlichungsnummer: WO 2005/015585

(56) Entgegenhaltungen:
- EP-A- 0 033 697
- EP-A- 1 081 824
- DE-A- 2 533 720
- US-A- 3 255 387
- PATENT ABSTRACTS OF JAPAN Bd. 1998, Nr. 12, 31. Oktober 1998 (1998-10-31) & JP 10 201091 A (FUJI HEAVY IND LTD), 31. Juli 1998 (1998-07-31)

## Beschreibung

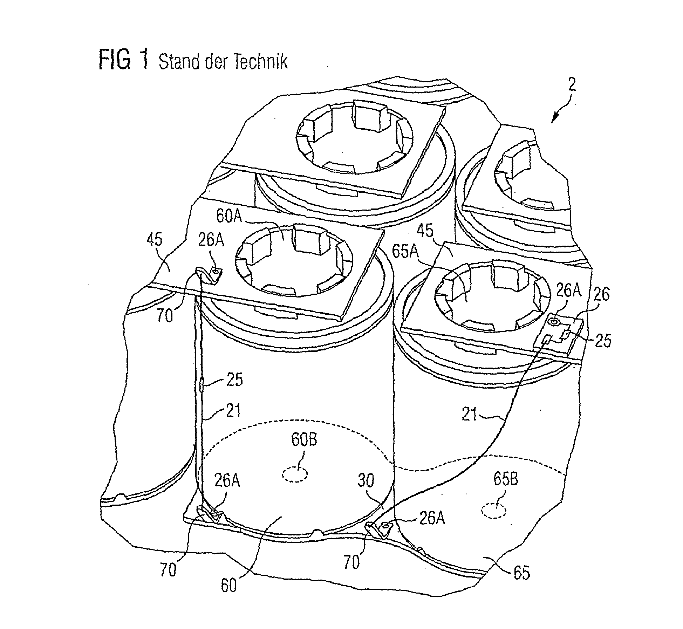

Bei Kondensatoren, zum Beispiel Doppelschichtkondensatoren ist in der Regel die Zellenspannung auf wenige Volt begrenzt. Für sehr viele Anwendungen werden allerdings Betriebsspannungen benötigt die wesentlich höher sind, so daß mehrere Kondensatoren zu einen Kondensatormodul in Reihe geschaltet werden. Bei Kondensatormodulen werden die einzelnen Kondensatoren häufig über Anschlußbleche mit weiteren Kondensatoren verbunden (siehe Figur 1). Einzelne Kondensatoren weisen dabei häufig ein voneinander abweichendes Selbstentladungsverhalten auf, so daß sich die Gesamtspannung häufig nicht gleichmäßig auf die einzelnen Kondensatoren verteilt. Dadurch können an einzelnen Kondensatoren Überspannungen auftreten, die zur schnellen Alterung bis hin zur Zerstörung des Kondensatormoduls führen. Aus diesem Grunde werden häufig für eine kontrollierte Selbstentladung die elektrischen Anschlüsse mittels aufwendiger Maßnahmen spannungssymmetriert. Dazu werden häufig hochohmige elektrische Verbindungen zwischen den beiden elektrischen Anschlüssen eines Kondensators angebracht. Dabei werden die Kondensatoren häufig mit lötbaren verdrahteten Widerständen versehen oder mit bestückten Leiterplatten auf denen Widerstände vorhanden sind; verlötet. Die verdrahteten Widerstände können dabei über sogenannte Lötfahnen mit den elektrischen Anschlüssen verbunden werden, wobei diese Lötfahnen vernietet sind. Die Spannungssymmetrierung von einzelnen Kondensatoren in einem Kondensatormodul erfordert damit viele einzelne Arbeitsschritte und ist aus diesem Grunde sehr zeit- und damit auch kostenintensiv.

Beispielsweise ist aus EP 1 081 824 A2 eine Methode und ein Aufbau bekannt, um in einer Reihenschaltung von Kondensatoren die Spannungen anzugleichen. Hier wird parallel zu jedem einzelnen Kondensator in der Reihenschaltung ein Aufbau zur Spannungsangleichung angeschlossen, um den Strom parallel zum Kondensator abzuleiten. Es entsteht parallel zu den Kondensatoren eine Serienschaltung von Transistoren mit antiparallel dazu geschalteten Dioden. Zwischen den Transistoren und den Kondensatoren befinden sich Spulen.

In US 3,255,387 A wird ein abgedichteter Kondensator und seine Montage beschrieben. Hier werden als elektrische Verbindungen flächige Bauteile verwendet, die an beiden Enden an die jeweiligen Halterungen angeschweißt werden.

Ziel der vorliegenden Erfindung ist es, ein Kondensatormodul anzugeben, das bezüglich der oben genannten Nachteile verbessert ist.

Diese Ziel wird erfindungsgemäß durch ein Kondensatormodul nach Anspruch 1 erreicht. Vorteilhafte Ausgestaltungen des. Kondensatormoduls sowie ein Herstellungsverfahren für das Kondensatormodul sind Gegenstand weiterer Ansprüche.

Die Erfindung beschreibt ein Kondensatormodul, bei dem wenigstens ein erster und ein zweiter Kondensator mit jeweils einem ersten und zweiten externen elektrischen Anschluß vorhanden ist. Die ersten elektrischen Anschlüsse beider Kondensatoren sind elektrisch leitend über einen flächig ausgeformten Leiter verbunden. Auf dem flächig ausgeformten Leiter sind zusätzliche elektrische Bauelemente vorhanden, die zusammen eine hochohmige elektrische Verbindung zwischen den ersten elektrischen Anschlüssen herstellen. Die elektrischen Bauelemente umfassen elektrische Widerstände. Zwischen dem Leiter und den beiden zweiten elektrischen Anschlüssen besteht eine zusätzliche elektrisch leitende Verbindung.

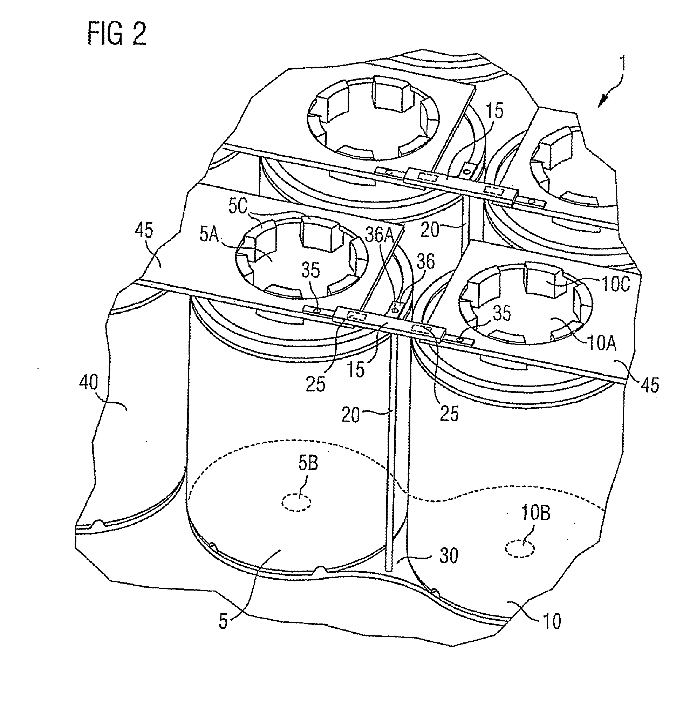

Der Vorteil des erfindungsgemäßen Kondensatormoduls besteht darin, daß mittels der einen Leiterplatte, die sowohl elektrisch leitend mit den ersten elektrischen Anschlüssen als auch mit den zweiten elektrischen Anschlüssen der beiden Kondensatoren verbunden ist, auf besonders einfache Art und Weise eine Symmetrierung von zwei Kondensatoren erreicht werden kann (siehe beispielsweise Figur 2). Bei herkömmlichen Spannungssymmetrierungen sind wesentlich mehr Arbeitsschritte nötig, da jeweils immer nur ein einzelner Kondensator und nicht wie bei dem erfindungsgemäßen Kondensatormodul zwei Kondensatoren spannungssymmetriert werden.

Weiterhin besteht der Vorteil des erfindungsgemäßen Kondensators darin, daß aufgrund der reduzierten Anzahl von Bauteilen für die Spannungssymmetrierung im Vergleich zu herkömmlichen Modulen ein erfindungsgemäßes Kondensatormodul im Betrieb zuverlässiger ist, da weniger Bauteile vorhanden sind, deren Defekt eine Beeinträchtigung des Kondensatormoduls nach sich ziehen könnte.

Vorteilhaft ist weiterhin ein erfindungsgemäßes Kondensatormodul bei dem die zusätzliche elektrische Verbindung zwischen dem Leiter und den zweiten elektrischen Anschlüssen einen Draht umfaßt. Der Draht ist dabei vorteilhafterweise laserschweißbar, so daß er besonders einfach und dauerhaft mit dem Leiter sowie den zweiten elektrischen Anschlüssen des ersten und zweiten Kondensators verbunden werden kann. Vorteilhafterweise ist der Draht ein Aluminiumdraht mit einer Dicke von etwa 2 mm.

Die elektrischen Widerstände ermöglichen dabei besonders vorteilhaft eine hochohmige elektrische Verbindung wie sie für Spannungssymmetrierungen benötigt wird.

Vorteilhafterweise sind die elektrischen Widerstände auf dem flächig ausgeformten Leiter in SMD-Bauweise direkt auf dem flächig ausgeformten Leiter angeordnet. Der flächig ausgeformte Leiter kann beispielsweise eine Epoxidharzplatte umfassen in der Kupferleiterbahnen zur elektrischen Kontaktierung der elektrischen Anschlüsse der Kondensatoren und der elektrischen Bauelemente vorhanden sind.

In einer weiteren Ausgestaltung eines erfindungsgemäßen Kondensatormoduls sind die zweiten elektrischen Anschlüsse beider Kondensatoren über ein erstes Verbindungsblech elektrisch leitend miteinander verbunden. Das erste Verbindungsblech steht dann günstigerweise im elektrischen Kontakt mit dem flächig ausgeformten Leiter.

Das erste Verbindungsblech kann dazu dienen eine interne Reihenschaltung zwischen einzelnen Kondensatoren im Kondensatormodul zu realisieren. Bei dieser Ausführungsform eines erfindungsgemäßen Kondensatormoduls kann das erste Verbindungsblech gleichzeitig dazu dienen, einen besonders einfach zu realisierenden Kontakt zwischen den beiden zweiten elektrischen Anschlüssen der beiden Kondensatoren und dem flächig ausgeformten Leiter, z.B. über einen Draht herzustellen (siehe beispielsweise Figur 2).

Günstigerweise steht der flächig ausgeformte Leiter über laserschweißbare Verbindungen im elektrischen Kontakt mit den ersten elektrischen Anschlüssen. Bei dem laserschweißbaren Verbindungen kann es sich beispielsweise um vernickelte oder verzinnte Anschlußbleche handeln, die an dem flächig ausgeformten Leiter vorhanden sind. Die Anschlußbleche sind dann mittels Laserschweißpunkten mit den ersten elektrischen Anschlüssen verbunden. Der Vorteil der laserschweißbaren Verbindungen besteht darin, daß aufgrund des Laserschweißens eine besonders feste und dauerhafte, stoffschlüssige elektrisch leitende Verbindung erzielt werden kann. Die stoffschlüssige Verbindung, bei der sich die Materialien der Anschlußbleche und der ersten elektrischen Anschlüsse, zum Beispiel in beiden Fällen Aluminium, direkt miteinander verbinden ist besonders vorteilhaft.

Weiterhin kann zumindest einer der ersten elektrischen Anschlüsse eines der beiden Kondensatoren mit einem dritten Kondensator im Kondensatormodul elektrisch leitend über ein zweites Verbindungsblech verbunden sein.

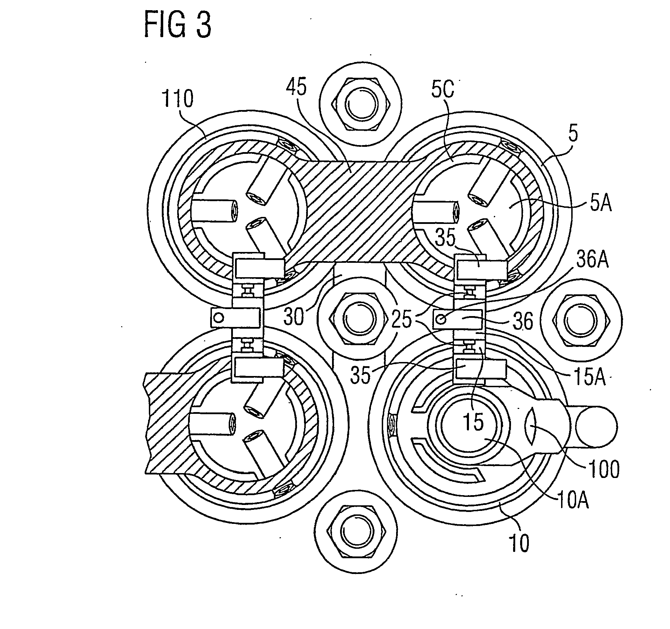

Mittels des zusätzlichen zweiten Verbindungsblechs können weitere Kondensatoren zusätzlich zu den beiden bereits vorhandenen ersten und zweiten Kondensatoren im erfindungsgemäßen Kondensatormodul in Reihe geschaltet werden (siehe beispielsweise Figuren 2 und 3).

Bei einem derartigen Kondensatormodul mit einem zweiten Verbindungsblech ist es besonders vorteilhaft wenn die Kontaktbereiche zwischen den ersten elektrischen Anschlüssen und dem zweiten Verbindungsblech laserschweißbar sind. Während des Laserschweißens verbindet sich das Metall der ersten elektrischen Anschlüsse, häufig Aluminium, stoffschlüssig mit dem Material des zweiten Verbindungsblechs, das häufig ebenfalls Aluminium ist, so daß eine besonders dauerhafte und feste Verbindung resultiert.

Bei einem erfindungsgemäßen Kondensatormodul kann der flächig ausgeformte Leiter eine Kunststoffplatte umfassen. Kunststoffplatten sind besonders einfach und billig herzustellen, wobei auf diesen Kunststoffplatten besonders einfach elektrisch leitende Leiterbahnen zum Beispiel in der Form von Kupferleiterbahnen realisiert werden können, die zur elektrischen Anbindung der in SMD-Bauweise verwirklichten Widerstände dienen können (siehe beispielsweise Figur 3).

Gegenstand der Erfindung ist weiterhin ein Verfahren zur Herstellung eines erfindungsgemäßen Kondensatormoduls bei dem wenigstens zwei Kondensatoren mit jeweils einem ersten und zweiten elektrischen Anschluß bereitgestellt werden und bei dem deren erste elektrische Anschlüsse mittels Schweißens mit einem flächig ausgeformten Leiter elektrisch leitend verbunden werden, wobei ein Leiter verwendet wird, auf dem elektrische Bauelemente zur Herstellung einer hochohmigen elektrischen Verbindung vormontiert sind und bei dem als elektrische Bauelemente Widerstände verwendet werden. Dabei wird zusätzlich im gleichen Verfahrensschritt der Leiter elektrisch leitend mittels Schweißen mit den beiden zweiten elektrischen Anschlüssen elektrisch leitend verbunden.

Das erfindungsgemäße Verfahren erlaubt eine besonders einfache in einem Verfahrensschritt durchführbare Symmetrierung von zwei elektrischen Kondensatoren in einem Kondensatormodul. Das Schweißen der elektrischen Verbindungen ermöglicht dabei eine besonders dauerhafte und feste Symmetrierung der beiden Kondensatoren im Kondensatormodul.

Aufgrund der Verwendung von vormontierten Leiterplatten auf denen die Widerstände angeordnet sind, ergibt sich ein besonders einfaches Assemblieren des Kondensatormoduls, da die Widerstände nicht mehr einzeln mit den Kondensatoranschlüssen verbunden werden müssen, wie dies bei herkömmlichen Kondensatormodulen der Fall ist (siehe beispielsweise Figur 1).

Vorteilhafterweise werden verzinnte oder vernickelte Anschlußbleche, die an dem Leiter als Kontakte zu den ersten elektrischen Anschlüssen vorhanden sind, laserverschweißt. Verzinnte oder vernickelte Bereiche ermöglichen es besonders gut die Anschlußbleche mittels Laserschweißens an die ersten elektrischen Anschlüsse anzubinden. Während des Laserschweißens verdampft die Nickel- oder Zinnschicht und ermöglicht eine stoffschlüssige Verbindung zwischen den Metallen der ersten elektrischen Anschlüsse (z.B. Al) und dem Metall der Anschlußbleche, häufig ebenfalls Aluminium.

Vorteilhafterweise wird der Leiter mittels eines elektrisch leitenden Drahts, zum Beispiel eines Aluminiumdrahts mit den beiden zweiten elektrischen Anschlüssen elektrisch leitend verbunden. Dabei ist es besonders vorteilhaft wenn der Draht mittels eines weiteren verzinnten oder vernickelten Anschlußblechs im elektrisch leitenden Kontakt mit dem flächig ausgeformten Leiter gebracht wird (siehe beispielsweise Figuren 2 oder 3).

Mittels eines Anschlußlochs kann dabei der Draht in das weitere verzinnte oder vernickelte Anschlußblech gesteckt werden, wobei anschließend eine permanente Verbindung mittels Laserschweißen hergestellt werden kann.

Besonders vorteilhaft ist es wenn an dem flächig ausgeformten Leiter verzinnte oder vernickelte Anschlußbleche sowohl für die Kontaktierung der ersten elektrischen Anschlüsse der Kondensatoren als auch für die Kontaktierung des Drahts für die zweiten elektrischen Anschlüsse vorgesehen werden und darüber hinaus die Kontaktbereiche zwischen den ersten elektrischen Anschlüssen und einem zweiten Verbindungsblech verzinnt oder vernickelt sind. Dieses zweite Verbindungsblech dient wie bereits oben genannt zur Reihenschaltung von weiteren Kondensatoren im erfindungsgemäßen Kondensatormodul. Bei diesem Verfahren ist es dann besonders einfach möglich in einem Laserschweißschritt
- sowohl die ersten elektrischen Anschlüsse der beiden Kondensatoren mit dem zweiten Verbindungsblech zu verschweißen,
- als auch die verzinnten oder vernickelten Anschlußbleche zwischen den ersten Anschlüssen und dem flächig ausgeformten Leiter zu verschweißen und
- zusätzlich die Verbindung zwischen dem flächig ausgeformten Leiter und dem Draht zur Anbindung an die zweiten elektrischen Anschlüsse zu verschweißen.

Bei einer derartigen Variante eines erfindungsgemäßen Verfahrens lassen sich damit in einem Verfahrensschritt sowohl die Kontaktierungen für die Symmetrierung (Kontakte zwischen den ersten elektrischen Anschlüssen und den flächig ausgeformten Leiter, Kontakt zwischen dem flächig ausgeformten Leiter und dem Draht zur Kontaktierung der zweiten elektrischen Anschlüsse) als auch die Kontakte zur Reihenschaltung von mehreren Kondensatoren im erfindungsgemäßen Kondensatormodul (Kontakte zwischen ersten elektrisch leitenden Anschlüssen und zweitem Verbindungsblech) in einem Verfahrensschritt verschweißen.

Im folgenden soll die Erfindung anhand von Ausführungsbeispielen und schematischen Figuren noch näher erläutert werden.
- Figur 1: zeigt eine perspektivische Ansicht eines herkömmlichen Kondensatormoduls
- Figur 2: zeigt eine perspektivische Ansicht einer Variante eines erfindungsgemäßen Kondensatormoduls
- Figur 3: zeigt eine Variante eines erfindungsgemäßen Kondensatormoduls in der Aufsicht.

Figur 1 zeigt ein herkömmliches Kondensatormodul 2 bei dem ein erster Kondensator 60 und ein zweiter Kondensator 65 im Vordergrund gezeigt sind. Weitere Kondensatoren können über die ersten elektrischen Anschlüsse 60A und 65A dieser beiden Kondensatoren in Reihe geschaltet werden. Weiterhin ist ein zweites Anschlußblech 30 vorhanden, das die gestrichelt gezeichneten, am Boden beider Kondensatoren vorhandenen zweiten elektrischen Anschlüsse 60B und 65B elektrisch leitend miteinander verbindet. Beide Kondensatoren 60 und 65 sind getrennt voneinander mittels zweier unterschiedlicher herkömmlicher Methoden symmetriert.

Beim ersten Kondensator 60 wird eine elektrisch leitende Verbindung zwischen dem ersten elektrischen Anschluß 60A und dem zweiten elektrischen Anschluß 60B mittels eines verdrahteten Widerstandes 25 hochohmig hergestellt. Dabei wird, was besonders aufwendig.ist, der Draht 21 des elektrischen Widerstandes 25 sowohl am ersten elektrischen Anschluß 60A als auch am zweiten elektrischen Anschluß 60B über Lötfahnen 70 angebunden. Die beiden Lötfahnen 70 des ersten und zweiten elektrischen Anschlusses sind dabei über Nieten 26A mit dem zweiten Anschlußblech 30 beziehungsweise dem ersten Anschlußblech 45 verbunden. Somit ist es bei dieser herkömmlichen Variante der Symmetrierung notwendig sowohl Lötschritte zur Anbindung des Drahts 21 an die Lötfahnen 70 vorzunehmen als auch die Lötfahnen separat mittels Nieten 26A an den jeweiligen Blechen zu befestigen. Diese Symmetrierungsmethode ist besonders zeit- und damit kostenaufwendig.

Der zweite Kondensator 65 ist ebenfalls mittels eines Widerstandes der eine hochohmige elektrische Verbindung zwischen dem ersten Anschluß 65A und dem zweiten Anschluß 65B herstellt, symmetriert. Dabei wird eine Leiterplatte 26 verwendet, auf der ein elektrischer Widerstand 25 angeordnet ist. Dieser elektrische Widerstand ist auf dem elektrischen Anschlußblech 45 mittels einer Niete 26A befestigt. Weiterhin ist ein Draht 21 vorhanden, der eine Lötfahne 70 die auf dem zweiten Anschlußblech 30 angeordnet ist, elektrisch leitend mit der Leiterplatte 26A und dem Widerstand 25 verbindet. Auch bei dieser herkömmlichen Symmetrierungsmethode sind diverse Lötschritte (Anbindung des Drahts 21 an Lötfahne 70 und an Platine 26) sowie Nietschritte (Befestigung der Leiterplatte 26 auf den zweiten Anschlußblech 45 und Befestigung der Lötfahne 70 auf dem ersten Anschlußblech 30 nötig. Somit liegt auch bei dieser Symmetrierungsmethode ein besonders zeit- und damit kostenaufwendiges Verfahren vor.

Figur 2 zeigt eine perspektivische Ansicht einer Variante eines erfindungsgemäßen Kondensatormoduls 1. Dabei sind im Vordergrund wieder ein erster Kondensator 5 und ein zweiter Kondensator 10 gezeigt, die jeweils einen ersten elektrischen Anschluß 5A, 10A und einen zweiten elektrischen Anschluß 5B, 10B am Boden des jeweiligen Kondensators aufweisen. Weiterhin ist ein flächig ausgeformter Leiter 15., beispielsweise in Form einer Epoxidharzplatte auf der elektrisch leitende Leiterbahnen, zum Beispiel Kupferleiterbahnen ausgeformt sind, vorhanden. Dieser Leiter 15 weist zusätzlich auf seiner Unterseite in der Figur 2 gestrichelt dargestellte elektrische Bauelemente in der Form von Widerständen 25 auf. Der flächig' ausgeformte Leiter 15 ist mittels zweier, vorteilhafterweise verzinnter oder vernickelter Anschlußbleche 35 über zweite Verbindungsbleche 45 mit den ersten Anschlüssen 5A, 10A verbunden. Diese zweiten Verbindungsbleche 45 kontaktieren einerseits jeweils die ersten elektrischen Anschlüsse 5A und 10A der beiden Kondensatoren und ermöglichen eine Reihenschaltung mit weiteren Kondensatoren, zum Beispiel Kondensator 40 in einem erfindungsgemäßen Kondensatormodul. Da die zweiten Verbindungsbleche 45 auch im elektrischen Kontakt mit den ersten elektrischen Anschlüssen 5A und 10A stehen, wird somit über die Anschlußbleche 35 eine elektrische Anbindung des Leiters 15 an die ersten elektrische Anschlüsse hergestellt. Zusätzlich ist ein weiteres Anschlußblech 36 mit einem Loch 36A zur Anbindung des Drahtes 20 vorhanden. Dieser Draht 20 ist über das erste Anschlußblech 30 mit dem zweiten elektrischen Anschlüssen 5B und 10B elektrisch leitend verbunden.

Bei einem derartig aufgebauten Kondensatormodul ist es ohne weiteres aufgrund der verzinnten oder vernickelten Anschlußbleche 35 oder 36 möglich, mittels eines einzigen Laserschweißschrittes eine dauerhafte und gute Verbindung zwischen dem flächig ausgeformten Leiter 15 und den ersten elektrischen Anschlüssen 5A und 10A über die laserschweißbaren verzinnten oder vernickelten Anschlußbleche 35 herzustellen und gleichzeitig das Verbindungsblech 36 und den Draht 20 zu verschweißen. In einem einzigen Schritt können zusätzlich die Anschlußsegmente 5C, 10C mit den Verbindungsblechen 45 laserverschweißt werden. Somit können mittels einer besonders einfachen Assemblierung und einen anschließenden Schweißschritt, der beispielsweise Laserschweißen beinhaltet zwei Kondensatoren 5 und 10 in einem Schritt gemeinsam symmetriert und miteinander verbunden werden. Aufgrund der dauerhaften Laserschweißverbindungen und der einfachen Assemblierung sind erfindungsgemäße Kondensatormodule weniger störanfällig als herkömmliche Module und auch gleichzeitig kostengünstiger herzustellen.

Figur 3 zeigt eine Aufsicht auf ein erfindungsgemäßes Kondensatormodul. Im rechten Bereich der Figur 3 sind dabei ein erster Kondensator 5 und ein zweiter Kondensator 10 dargestellt, die über einen flächig ausgeformten Leiter 15 gemeinsam symmetriert sind. Der flächig ausgeformte Leiter 15, hier eine Leiterplatte ist über Anschlußbleche 35 mit den jeweiligen ersten elektrischen Anschlüssen 5A und 10A elektrisch leitend verbunden. Beim.ersten Kondensator 5 kommt dabei eine elektrisch leitende Verbindung zwischen der Leiterplatte 15 und einem zweiten Verbindungsblech 45, das im elektrischen Kontakt mit dem ersten elektrischen Anschluß 5A steht, zustande. Das zweite Verbindungsblech 45 dient dabei zur Reihenschaltung des Kondensators 5 mit einem dritten Kondensator 110. Auf der Leiterplatte 15 sind dabei zwei Widerstände 25 in SMD-Bauweise angeordnet. Die Leiterplatte 15 besteht vorteilhafterweise aus einer Epoxidharzplatte oder einer Hartpapierplatte auf der Kupferleiterbahnen 15A angeordnet sind, die für eine elektrische Anbindung der Widerstände 25 an die ersten elektrischen Anschlüsse 5A und 10A sorgen. Auf der Leiterplatte 15 ist weiterhin ein weiteres Anschlußblech 36 mit einem Loch 36A vorhanden in dem sich ein Draht befindet (in Figur 3 nicht gezeigt). Dieser Draht dient zur Anbindung an ein erstes Verbindungsblech 30, das die zweiten in der Figur 3 ebenfalls nicht gezeigten elektrischen Anschlüsse beider Kondensatoren 5 und 10 miteinander verbindet. Am ersten elektrischen Anschluß 10A des Kondensators 10 ist weiterhin zur festen Verbindung eine Schraubverbindung 100 vorgesehen.

Die Erfindung beschränkt sich nicht auf die hier dargestellten Ausführungsbeispiele und Figuren. Weitere Variationen sind vor allen hinsichtlich der Kontaktierung zwischen dem flächig ausgeformten Leiter und den ersten elektrischen Anschlüssen als auch zwischen der Kontaktierung des Leiters zu den zweiten elektrischen Anschlüssen möglich.

## Patentansprüche

1. Kondensatormodul (1) mit den Merkmalen:
- wenigstens ein erster (5) und ein zweiter (10) Kondensator mit jeweils einem ersten (5A, 10A) und zweiten (5B, 10B) externen elektrischen Anschluß sind vorhanden,
- die ersten elektrischen Anschlüsse (5A, 10A) beider Kondensatoren (5, 10) sind elektrisch leitend über einen flächig ausgeformten Leiter (15) verbunden,
- auf dem flächig ausgeformten Leiter (15) sind zusätzliche elektrische Bauelemente (25) vorhanden, die zusammen eine hochohmige elektrische Verbindung zwischen den ersten elektrischen Anschlüssen herstellen
- die elektrischen Bauelemente (25) umfassen elektrische Widerstände
- wobei zwischen dem Leiter (15) und den beiden zweiten elektrischen Anschlüssen (5B, 10B) eine zusätzliche elektrisch leitende Verbindung besteht.

2. Kondensatormodul nach dem vorhergehenden Anspruch,
- bei dem die zusätzliche elektrische Verbindung einen Draht (20) umfaßt.

3. Kondensatormodul nach dem vorhergehenden Anspruch,
- bei dem der Draht (20) laserschweißbar ist.

4. Kondensatormodul nach dem vorhergehenden Anspruch,
- bei dem der Draht (20) ein Aluminiumdraht mit einer Dicke von etwa 2 mm ist.

5. Kondensatormodul nach einem der vorhergehenden Ansprüche,
- bei dem die zweiten elektrischen Anschlüsse (5B, 10B) beider Kondensatoren (5, 10) zusätzlich über ein erstes Verbindungsblech (30) elektrisch leitend miteinander verbunden sind, das im elektrischen Kontakt mit dem flächig ausgeformten Leiter (15) steht.

6. Kondensatormodul nach einem der vorhergehenden Ansprüche,
- bei dem der flächig ausgeformte'Leiter (15) über laserschweißbare Verbindungen (35) im elektrischen Kontakt mit den ersten elektrischen Anschlüssen (5A, 10A) steht.

7. Kondensatormodul nach dem vorhergehenden Anspruch,
- bei dem vernickelte Anschlußbleche (35) an dem flächig ausgeformten Leiter (15) als laserschweißbare Verbindungen vorhanden sind.

8. Kondensatormodul nach einem der vorhergehenden Ansprüche,
- bei dem zumindest einer der ersten elektrischen Anschlüsse (5A, 10A) eines der beiden Kondensatoren (5; 10) mit einem dritten Kondensator (40) elektrisch leitend über ein zweites Verbindungsblech (45) verbunden ist.

9. Kondensatormodul nach dem vorhergehenden Anspruch,
- bei dem die Kontaktbereiche (5C, 10C) zwischen den ersten elektrischen Anschlüssen (5A, 10A) und dem zweiten Verbindungsblech (45) laserschweißbar ist.

10. Kondensatormodul nach einem der vorhergehenden Ansprüche,
- bei dem der Leiter (15) eine Kunststoffplatte umfaßt.

11. Verfahren zur Herstellung eines Kondensatormoduls (1) nach Anspruch 1, bei dem
- wenigstens zwei Kondensatoren (5, 10) mit jeweils einem ersten (5A, 10A) und zweiten (5B, 10B) elektrischen Anschluß bereitgestellt und deren erste elektrische Anschlüsse (5A, 10A) mittels Schweißens mit einem flächig ausgeformten Leiter (15) elektrisch leitend verbunden werden, wobei ein Leiter (15) verwendet wird, auf dem elektrische Bauelemente (25) zur Herstellung einer hochohmigen elektrischen Verbindung vormontiert sind und bei dem als elektrische Bauelemente (25) Widerstände verwendet werden,
- zusätzlich im.gleichen Verfahrensschritt der Leiter (15) elektrisch leitend mittels Schweißens mit den beiden zweiten elektrischen Anschlüssen (5B, 10B) elektrisch leitend verbunden wird.

12. Verfahren nach Anspruch 11,
- bei dem verzinnte oder vernickelte Anschlußbleche (35), die an dem Leiter (15) als Kontakte zu den ersten elektrischen Anschlüssen vorhanden sind, laserverschweißt werden.

13. Verfahren nach einem der vorhergehenden Ansprüche 11 und 12,
- bei dem der Leiter (15) mittels eines elektrisch leitenden Drahts (20) mit den beiden zweiten elektrischen Anschlüssen (5B, 10B) elektrisch leitend verbunden wird.

14. Verfahren nach dem vorhergehenden Anspruch,
- bei dem der Draht (20) mittels eines weiteren verzinnten oder vernickelten Anschlußblechs (36) in elektrisch leitenden Kontakt mit dem flächig ausgeformten Leiter gebracht wird.

## Claims

1. Capacitor module (1) with the features:
- at least one first capacitor (5) and one second capacitor (10) each having a first external electrical terminal (5A, 10A) and a second external electrical terminal (5B, 10B) are provided,
- the first electrical terminals (5A, 10A) of both capacitors (5, 10) are electrically conductively connected by means of a two-dimensionally shaped conductor (15),
- additional electrical components (25) which together establish a high-impedance electrical connection between the first electrical terminals are provided on the two-dimensionally shaped conductor (15),
- the electrical components (25) comprise electrical resistors,
- Wherein there is an additional electrically conductive connection between the conductor (15) and the two second electrical terminals (5B, 10B).

2. Capacitor module according to the preceding claim,
- in which the additional electrical connection comprises a wire (20).

3. Capacitor module according to the preceding claim,
- in which the wire (20) is laser-weldable.

4. Capacitor module according to the preceding claim,
- in which the wire (20) is an aluminium wire having a thickness of approximately 2 mm.

5. Capacitor module according to one of the preceding claims,
- in which the second electrical terminals (5B, 10B) of both capacitors (5, 10) are additionally electrically conductively connected to one another by means of a first connecting plate (30) which is in electrical contact with the two-dimensionally shaped conductor (15).

6. Capacitor module according to one of the preceding claims,
- in which the two-dimensionally shaped conductor (15) is in electrical contact with the first electrical terminals (5A, 10A) by means of laser-weldable connections (35).

7. Capacitor module according to the preceding claim,
- in which nickel-coated terminal plates (35) are provided on the two-dimensionally shaped conductor (15) as laser-weldable connections.

8. Capacitor module according to one of the preceding claims,
- in which at least one of the first electrical terminals (5A, 10A) of one of the two capacitors (5, 10) is electrically conductively connected to a third capacitor (40) by means of a second connecting plate (45).

9. Capacitor module according to the preceding claim,
- in which the contact regions (5C, 10C) between the first electrical terminals (5A, 10A) and the second connecting plate (45) are laser-weldable.

10. Capacitor module according to one of the preceding claims,
- in which the conductor (15) comprises a plastic plate.

11. Method for producing a capacitor module (1) according to Claim 1, in which
- at least two capacitors (5, 10) each having a first electrical terminal (5A, 10A) and a second electrical terminal (5B, 10B) are provided, the first electrical terminals (5A, 10A) of which are electrically conductively connected to a two-dimensionally shaped conductor (15) by means of welding, use being made of a conductor (15) on which electrical components (25) for establishing a high-impedance electrical connection are premounted and in which resistors are used as the electrical components (25),
- the conductor (15) is additionally electrically conductively connected to the two second electrical terminals (5B, 10B) by means of welding in the same method step.

12. Method according to Claim 11,
- in which tin-coated or nickel-coated terminal plates (35), which are provided on the conductor (15) as contacts for the first electrical terminals, are laser-welded.

13. Method according to either of the preceding Claims 11 and 12,
- in which the conductor (15) is electrically conductively connected to the two second electrical terminals (5B, 10B) by means of an electrically conductive wire (20).

14. Method according to the preceding claim,
- in which the wire (20) is brought into electrically conductive contact with the two-dimensionally shaped conductor by means of a further tin-coated or nickel-coated terminal plate (36).

## Revendications

1. Module condensateur (1) possédant les caractéristiques suivantes :
- au moins un premier (5) et un deuxième (10) condensateurs respectivement munis d'une première (5A, 10A) et d'une deuxième (5B, 10B) bornes électriques externes sont présents,
- les premières bornes électriques (5A, 10A) des deux condensateurs (5, 10) sont reliées électriquement par le biais d'un conducteur de forme plate (15),
- sur le conducteur de forme plate (15) se trouvent des composants électriques supplémentaires (25) qui, ensemble, réalisent une liaison électrique à haute résistance entre les premières bornes électriques,
- les composants électriques (25) comprennent des résistances électriques,
- une liaison électriquement conductrice supplémentaire étant présente entre le conducteur (15) et les deux deuxièmes bornes électriques (5B, 10B).

2. Module condensateur selon la revendication précédente, dans lequel la liaison électrique supplémentaire comprend un fil (20).

3. Module condensateur selon la revendication précédente, dans lequel le fil (20) peut être soudé au laser.

4. Module condensateur selon la revendication précédente, dans lequel le fil (20) est un fil en aluminium ayant une épaisseur d'environ 2 mm.

5. Module condensateur selon l'une des revendications précédentes, dans lequel les deuxièmes bornes électriques (5B, 10B) des deux condensateurs (5, 10) sont en plus reliées électriquement entre elles par le biais d'une première tôle de liaison (30) qui est en contact électrique avec le conducteur de forme plate (15).

6. Module condensateur selon l'une des revendications précédentes, dans lequel le conducteur de forme plate (15) est en contact électrique avec les premières bornes électriques (5A, 10A) par le biais de liaisons soudables au laser (35).

7. Module condensateur selon la revendication précédente, dans lequel il existe sur le conducteur de forme plate (15) des tôles de raccordement nickelées (35) faisant office de liaisons soudables au laser.

8. Module condensateur selon l'une des revendications précédentes, dans lequel au moins l'une des premières bornes électriques (5A, 10A) de l'un des deux condensateurs (5, 10) est reliée électriquement avec un troisième condensateur (40) par le biais d'une deuxième tôle de liaison (45).

9. Module condensateur selon la revendication précédente, dans lequel les zones de contact (5C, 10C) entre les premières bornes électriques (5A, 10A) et la deuxième tôle de liaison (45) sont soudables au laser.

10. Module condensateur selon l'une des revendications précédentes, dans lequel le conducteur (15) comprend une plaque en matière plastique.

11. Procédé de fabrication d'un module condensateur (1) selon la revendication 1 dans lequel
- sont fournis au moins deux condensateurs (5, 10) respectivement munis d'une première (5A, 10A) et d'une deuxième (5B, 10B) bornes électriques et dont les premières bornes électriques (5A, 10A) sont reliées électriquement par soudage avec un conducteur de forme plate (15), le conducteur (15) utilisé comprenant, prémontés sur celui-ci, des composants électriques (25) destinés à réaliser une liaison électrique à haute résistance et dans lequel les composants électriques (25) utilisés sont des résistances,
- en plus de cela, dans la même étape du procédé, le conducteur (15) est relié électriquement par soudage avec les deux deuxièmes bornes électriques (5B, 10B).

12. Procédé selon la revendication 11, dans lequel des tôles de raccordement (35) étamées ou nickelées qui sont présentes sur le conducteur (15) en tant que contacts avec les premières bornes électriques sont soudées au laser.

13. Procédé selon l'une des revendications précédentes 11 et 12, dans lequel le conducteur (15) est relié électriquement avec les deux deuxièmes bornes électriques (5B, 10B) au moyen d'un fil électriquement conducteur (20).

14. Procédé selon la revendication précédente, dans lequel le fil (20) est mis en contact électrique avec le conducteur de forme plate au moyen d'une autre tôle de raccordement (36) étamée ou nickelée.
